**Europäisches Patentamt**

**European Patent Office**

**Office européen des brevets**

(19)

(11) Veröffentlichungsnummer: **0 144 605**
**B1**

(12) **EUROPÄISCHE PATENTSCHRIFT**

(45) Veröffentlichungstag der Patentschrift:
**13.01.88**

(51) Int. Cl.⁴: **G 06 F 1/00**

(21) Anmeldenummer: **84111910.0**

(22) Anmeldetag: **04.10.84**

(54) **Bildschirmgerät mit einem schwenkbaren Bildschirmgehäuse.**

(30) Priorität: **25.11.83 DE 3342741**

(43) Veröffentlichungstag der Anmeldung:
**19.06.85 Patentblatt 85/25**

(45) Bekanntmachung des Hinweises auf die Patenterteilung:
**13.01.88 Patentblatt 88/2**

(84) Benannte Vertragsstaaten:
**DE FR GB IT NL SE**

(56) Entgegenhaltungen:
**DE-U-1 908 639**
**FR-A-2 261 509**
**US-A-3 789 140**

(73) Patentinhaber: **Nixdorf Computer Aktiengesellschaft, Fürstenallee 7, D-4790 Paderborn (DE)**

(72) Erfinder: **Hardt, Walter, Hubertusweg 41, D-4790 Paderborn (DE)**
Erfinder: **Bonke, Norbert, Carl- Diem- Strasse 27, D-4790 Paderborn (DE)**
Erfinder: **Werner, Franz, Stemberg 38, D-4790 Paderborn (DE)**

(74) Vertreter: **Patentanwälte Schaumburg & Thoenes, Mauerkircherstrasse 31 Postfach 86 07 48, D-8000 München 80 (DE)**

EP 0 144 605 B1

## Beschreibung

Die Erfindung betrifft ein Bildschirmgerät der im Oberbegriff des Anspruchs 1 genannten Art.

Bildschirmgeräte der gattungsgemäßen Art vgl. (DE-U-1 908 639) ermöglichen ein Schwenken des Bildschirmgehäuses, um den Bildschirm beispielsweise an unterschiedliche Blickwinkel oder Lichteinfallswinkel anpassen zu können. Die Schwenkachse liegt im allgemeinen horizontal, das heißt, daß der Bildschirm unterschiedliche Neigungswinkel einnehmen kann. Die Erfindung umfaßt jedoch grundsätzlich auch Bildschirmgeräte, bei denen das Bildschirmgehäuse um eine senkrechte Achse zur Seite schwenkbar ist.

Bildschirmgeräte der gattungsgemäßen Art kommen in allen Lebensbereichen mehr und mehr zur Anwendung, beispielsweise als Datensichtgeräte, Fernsehapparate, Videobildschirmgeräte, Telespielgeräte usw. Es besteht deshalb auch mehr und mehr der Wunsch, derartige Bildschirmgeräte platzsparend und optisch ansprechend in Büro- oder Wohnmöbeln einzubauen.

Es sind schon Bildschirmgeräte der gattungsgemäßen Art bekannt, welche beispielsweise um eine horizontale Achse schwenkbar an einem Traggestell befestigt sind (z. B. Prospekt der Kontron Elektronik Gruppe, Eching bei München). Die bekannten Geräte sind im allgemeinen etwa kubusförmig ausgebildet. Ein Nachteil derartiger Geräte ist, daß sich beim Neigen der Gerte ihre effektive Höhe ändert, so daß die freizuhaltende Einbauhöhe größer sein muß als die Höhe des Bildschirmgehäuses.

Bei dem oben genannten DE-U-1 908 639, insbesondere Figur 2, sind die am Aufnahmegehäuse 4 anliegenden Bereiche 2 des Bildschirmgehäuses 1 jeweils kreiszylindrisch mit einer mit der Schwenkachse 6 zusammenfallenden Kreiszylinderachse ausgebildet, so daß beim Verschwenken des Bildschirmgehäuses um kleine Winkel sich keine Spalte zwischen diesem und dem Aufnahmegehäuse öffnen. Es wird deshalb vorgeschlagen, nach wie vor von dieser der Erfindung bezüglich der Aufgabe und der Lösung nächstkommenden Druckschrift auszugehen.

Bei größeren Schwenkwinkeln wird jedoch die Rückseite des Bildschirmgehäuses sichtbar, zwischen diesem und dem Aufnahmegehäuse öffnet sich ein unschöner, den Eintritt von Schmutz und Fremdkörpern ermöglichender Spalt. Ein weiterer Nachteil wird darin gesehen, daß das Bildschirmgehäuse an seiner Rückseite entlang einer zweiten Schnittebene abgeschnitten ist, so daß es keine kreiszylindrische Rückwand aufweist. Dadurch ist eine raumsparende, kompakte Anordnung nicht möglich, da der Raum, welcher beim Schwenken des Bildschirmgehäuses innerhalb des Aufnahmegehäuses überstrichen wird, in diesem freigehalten werden muß. Dieser Raum ist zur Aufnahme von Bauteilen verloren, so daß sich insgesamt ein größeres Bauvolumen ergibt, was der grundsätzlich bestehenden Forderung nach einer Verkleinerung der Geräte entgegensteht.

Demgegenüber ist es die Aufgabe der vorliegenden Erfindung, ein Bildschirmgerät der gattungsgemäßen Art zu schaffen, welches kompakt und raumsparend aufgebaut ist und bei welchem sich auch bei großen Schwenkwinkeln zwischen Bildschirmsgehäuse und Aufnahmegehäuse keine Spalte öffner.

Diese Aufgabe ist durch die im Kennzeichen des Anspruches 1 enthaltenen Merkmale gelöst.

Die Erfindungsgemäße Form und Anordnung des Bildschirmgehäuses erlaubt gegenüber allen bekannten Lösungen weitaus größere Schwenkwinkel, ohne daß sich zwischen dem Bildschirmgehäuse und dem Aufnahmegehäuse Spalte bilden. Die Anordnung gewährleistet eine bestmögliche Raumausnutzung, da sich das Aufnahmegehäuse bei jeder Winkellage des Bildschirmgehäuses an dieses ohne Bildung von Toträumen anschmiegt. Sowohl das Bildschirmgehäuse als auch das Aufnahmegehäuse können innerhalb ihrer Außenwände vollständig mit Bauteilen bestückt sein.

Durch die erfindungsgemäße Ausbildung eignet sich das Bildschirmgerät auch in hervorragender Weise zum Einbau in Büro- oder Wohnmöbel. Dadurch, daß die Breite und die Höhe des Aufnahmegehäuses höchstens gleich oder kleiner als die Breite des Bildschirmgehäuses sind und deshalb die zylindrisch gewölbte Rückseite des Bildschirmgehäuses nur mit einem Teil ihres Umfanges in der Ausnehmung des Aufnahmegehäuses aufgenommen ist, ist bei der üblichen Blickrichtung das Aufnahmegehäuse vollständig vom Bildschirmgehäuse verdeckt. Der in den Büro- oder Wohnmöbeln vorzusehende Frontausschnitt kann eng am Bildschirmgehäuse anliegen, da dieses bei keiner Schwenkwinkellage einen über diesen Frontausschnitt hinausgehenden Raumbedarf hat.

Das Bildschirmgehäuse, welches entweder das gesamte Bildschirmgerät oder, wie später beschrieben wird, im wesentlichen nur die Bildröhre enthält, hat etwa die Form eines Kreiszylinderebschnittes, welcher um die Zylinderachse geschwenkt werden kann. Der eigentliche Bildschirm ist etwa in der Schnittebene angeordnet. Ein derartiger Kreiszylinderabschnitt kann eng von einem zur Bildschirmseite offenen Möbelgehäuse umgeben sein, ohne daß der bei herkömmlichen Bildschirmgeräten vorhandene Nachteil auftritt, daß zwischen dem Bildschirmgerät und dem umgebenden Möbelgehäuse bei bestimmten Schwenkwinkeln störende und wenig ansprechende Lücken verbleiben.

Die Schnittebene kann sich grundsätzlich in einem beliebigen Abstand von der Zylinderachse befinden. Die größte Schnittfläche und damit die größte mögliche Bildschirmfläche ergibt sich, wenn nach einer bevorzugten Ausgestaltung der Erfindung das Bildschirmgehäuse etwa die Form eines Halbzylinders hat.

Bei einer Ausführungsform ist vorgesehen, daß die Halteeinrichtung wenigstens einen an einer Stirnwand des Bildschirmgehäuses angreifenden Haltearm umfaßt. Damit der Abstand des Bildschirmgehäuses zu den Möbelwänden auch im Bereich seiner Stirnwände möglichst gering sein kann, ist weiterhin erfindungsgemäß vorgesehen, daß der oder die Haltearme jeweils durch eine an der Rückseite des Bildschirmgehäuses befindliche Öffnung hindurchgreifen und an der Innenseite der Stirnwände angreifen.

Bei einem anderen Ausführungsbeispiel der Erfindung ist vorgesehen, daß an der Rückseite des Bildschirmgehäuses eine Öffnung vorgesehen ist, welche wenigstens eine, vorzugsweise aber zwei einander gegenüber angeordnete, in Schwenkebenen liegende Begrenzungskanten aufweist, wobei jede dieser Begrenzungskanten in einer an einem Lagerbock angeordneten kreisbogenförmigen Führung gehalten wird. Diese Führungen können jeweils als die Begrenzungskanten aufnehmende Schienen oder in anderer Ausgestaltung als Rollenbahnen ausgebidet sein, welche aus mehreren auf einer kreisbogenförmigen Linie hintereinander angeordneten Rollenpaaren bestehen. Die vorbeschriebenen Halteeinrichtungen ermöglichen es, das Bildschirmgehäuse von dessen Rückseite her zu halten, so daß ein unterhalb des Bildschirmgehäuses angeordneter Fuß oder das Bildschirmgehäuse seitlich umgreifende Arme vermeidbar sind. Diese erfindungsgemäßen Merkmale tragen deshalb ebenfalls dazu bei, das Bildschirmgehäuse mit einem beigegebenen Bildabmessungen geringst möglichen Raumbedarf unterzubringen.

Es ist schon bekannt, in dem schwenkbaren Bildschirmgehäuse im wesentlichen nur die Bildröhre unterzubringen, während die übrigen Gerätebauteile in einem gesonderten Aufnahmegehäuse untergebracht sind (Prospekt der Tele-Video Systems, Inc.). Das Bildschirmgehäuse ist dabei schwenkbar an dem als Haltegestell dienenden Aufnahmegehäuse befestigt. Auch bei dieser bekannten Lösung ist die effektive Höhe des schwenkbaren Bildschirmes je nach Schwenkwinkel unterschiedlich, so daß beim Einbau in Büromöbel oder dergleiche die Einbauhöhe größer sein muß als die durch die Bildschirmgröße bestimmte Höhe der Frontfläche. Außerdem ist die Anordnung des Bildschirmgehäuses am Aufnahmegehäuse sehr unorganisch und wenig ansprechend, da sich je nach Schwenkwinkel jeweils unterschiedliche Spalte zwischen diesen beiden Teilen bilden.

Bei einer derartigen zweiteiligen Anordnung ist erfindungsgemäß vorgesehen, daß die zylindrisch gewölbte Rückseite des Bildschirmgehäuses in einer dazu komplementären konkaven Ausnehmung in einer Frontseite des Aufnahmegehäuses aufgenommen wird, so daß sich beide Teile zu einem im wesentlichen geschlossenen Körper ergänzen. Neben dem Vorteil, daß der bewegliche Teil des Gesamtgerätes und damit auch dessen Halte- und Lagereinrichtungen relativ leicht ausgeführt werden können, ergibt sich durch die erfindungsgemäße Ausgestaltung eine besonders kompakte und ansprechende Bauweise. Die Halteeinrichtung für die schwenkbare Lagerung des Bildschirmgerätes ist in weiterer Ausgestaltung der Erfindung auf einer Bodenplatte befestigt, welche in das Aufnahmegehäuse einsetzbar ist. Grundsätzlich kann das Aufnahmegehäuse mit Standfüssen versehen sein, wobei dann die Bodenplatte als bewegliches Teil in das Aufnahmegehäuse 30 eingesetzt wird. In einer bevorzugten Ausgestaltung der Erfindung ist jedoch die Bodenplatte, auf der vor der Endmontage des Gerätes alle Komponenten aufgebaut werden, mit Standfüssen versehen, wobei dann das Aufnahmegehäuse auf die Bodenplatte aufschiebbar oder aufsetzbar ist. Das Bildschirmgehäuse und das Gerätegehäuse sind erfindungsgemäß über durch die einander zugewandten Seiten der Gehäuse geführte flexible Leitungen miteinander verbunden, welche deshalb im montierten Zustand des Gerätes nicht sichtbar sind.

In einer weiteren Ausgestaltung der Erfindung ist vorgesehen, daß die Breite und/oder Höhe des Aufnahmegehäuses gleich oder kleiner als die Breite und/oder die Höhe der Schnittfläche des Bildschirmgehäuses sind. Die Bildschirmgröße bestimmt damit den sichtbaren Ausschnitt, welcher für den Einbau des Gerätes in einem Möbelstück freigehalten werden muß, da das hinter dem Bildschirmgehäuse angeordnete, diesem als Haltegestell dienende Aufnahmegehäuse bezüglich seiner Breite und Höhe über die Bildschirmbreite und -höhe nicht hinaussteht.

In weiterer Ausgestaltung der Erfindung insbesondere für Bildschirmgeräte mit horizontaler Schwenkachse ist vorgesehen, daß die zur Schwenkachse parallele Schwerelinie des Bildschirmgehäuses wenigstens annähernd mit dieser Schwenkachse zusammenfällt, so daß das Bildschirmgehäuse ohne weitere Mittel zur Lagefixierung jede Schwenkstellung von selbst beibehält.

In anderer Ausgestaltung ist vorgesehen, daß die Halteeinrichtung für die Lagerung des Bildschirmgehäuses Mittel zur Lagefixierung desselben umfaßt.

Mehrere Ausführungsbeispiele der Erfindung sind in der Zeichnung dargestellt und im folgenden näher beschrieben. Es zeigen:.

Fig. 1 Eine Gesamtansicht eines aus einem Bildschirmgehäuse und einem Aufnahmegehäuse bestehenden Bildschirmgerätes in perspektivischer Darstellung;

Fig. 2 eine Explosionsdarstellung einer Anordnung etwa gemäß Fig. 1;

Fig. 3 eine Einzelheit aus Fig. 2 in vergrößerter Darstellung;

Fig. 4 ein Bildschirmgehäuse etwa gemäß Fig. 2 mit zwei verschiedenen Halteeinrichtungen.

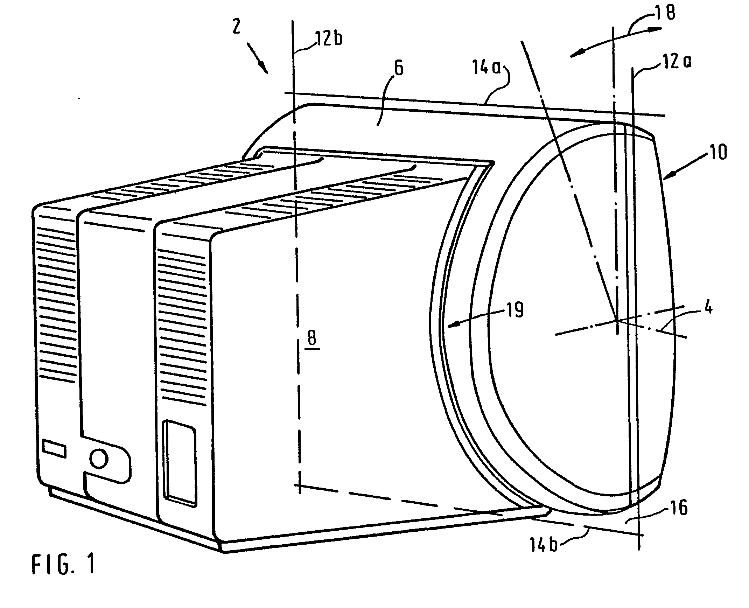

Das in Fig. 1 dargestellte Bildschirmgerät 2 umfaßt ein um eine horizontale Schwenkachse 4 schwenkbares Bildschirmgehäuse 6, welches etwa die Form eines Kreiszylinderabschnittes aufweist, und ein Aufnahmegehäuse 8, an welchem das Bildschirmgehäuse 6 schwenkbar gelagert ist. Das Aufnahmegehäuse 8 nimmt beispielsweise einen wesentlichen Teil der elektrischen und elektronischen Bauteile des Gesamtgerätes auf und dient gleichzeitig als Traggestell für die schwenkbare Lagerung des Bildschirmgehäuses 6, welches im wesentlichen nur die Bildröhre enthält. Die Haltemittel für die schwenkbare Lagerung des Bildschirmgehäuses 6 sind innerhalb des Aufnahmegehäuses 8 untergebracht, wie anhand der folgenden Figuren näher beschrieben wird.

Die Schnittfläche 10 des als Kreiszylinderabschnitt ausgebildeten Bildschirmgehäuses 6 wird praktisch durch den eigentlichen Bildschirm ausgefüllt. Es ist jedoch ohne weiteres auch möglich, mit entsprechend ausgebildeten Bildschirmmasken kleinere Bildröhren mit kleinerer Bildschirmfläche im Bildschirmgehäuse 6 unterzubringen.

Die beiden seitlichen Begrenzungslinien 12a und 12b sowie die obere bzw. untere Begrenzungslinie 14a bzw. 14b bezeichnen einen Frontausschnitt 16 eines das Bildschirmgerät 2 aufnehmenden Möbelstückes. Wie zu erkennen ist, kann das Bildschirmgerät 2 mit geringem Spielraum in einen das Bildschirmgehäuse 6 eng umgebenden Aufnahmeraum des Möbelstückes eingesetzt werden, da sich beim Schwenken des Bildschirmgehäuses in Richtung des Pfeiles 18 dessen effektive Höhe in Folge seiner kreiszylindrischen Ausbildung nicht ändert. Die Breite und Höhe des Aufnahmegehäuses 8 sollen höchstens gleich oder kleiner als die Breite und Höhe des Frontausschnittes 16 sein.

Die dem Bildschirmgehäuse 6 zugewandte Frontseite des Aufnahmegehäuses 8 weist eine zur Form des Bildschirmgehäuses komplementäre, konkave Ausnehmung 19 auf, welche sich eng an die zylindrische Fläche des Bildschirmgehäuses 6 anschmiegt. Auf diese Weise wird ein sehr kompakter raumsparender Aufbau für das Gesamtgerät erreicht, wobei insbesondere auch die Gefahr, daß die Schwenkbewegung des Bildschirmgehäuses 6 durch zwischen dieses und das Aufnahmegehäuse 8 fallende Teile blockiert wird, ausgeschlossen ist.

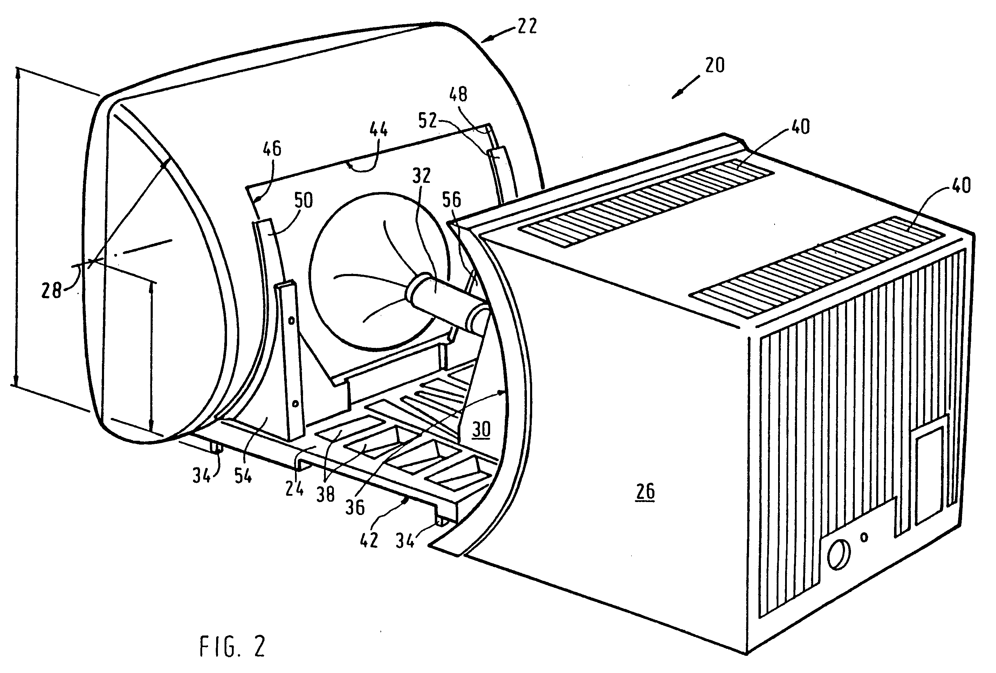

Fig. 2 zeigt ein Bildschirmgerät 20, welches in seinem Aufbau dem in Fig. 1 dargestellten Gerät entspricht. Es besteht im wesentlichen aus dem Bildschirmgehäuse 22, der Bodenplatte 24 sowie dem Aufnahmegehäuse 26. Das Bildschirmgehäuse 22 ist auf der Bodenplatte 24 um eine horizontale Schwenkachse 28 schwenkbar gelagert. Das Bildschirmgehäuse 22 enthält im wesentlichen nur die Bildröhre. Die übrigen elektrischen und elektronischen Bauelemente des Gerätes sind auf der Bodenplatte 24 aufmontiert, wie bei 30 angedeutet wurde. Die elektrische Verbindung zwischen dem schwenkbaren Bildschirmgehäuse und den Bauelementen 30 erfolgt über flexible elektrische Leitungen. Der Bildröhrenhals 32 ragt nach hinten über die Kontur des Bildschirmgehäuses hinaus. Es ist darauf zu achten, daß der beim Schwenken des Bildschirmgehäuses 22 vom Bildröhrenhals 32 überstrichene Bereich von Bauteilen freigehalten wird.

Nach der Montage des Bildschirmgehäuses 22 sowie der Bauelemente 30 auf der Bodenplatte 24 kann, wie in Fig. 2 dargestellt, das Aufnahmegehäuse 26 über die mit Standfüssen 34 versehene Bodenplatte 24 geschoben oder auf diese aufgesetzt werden, wobei sich die gewölbte Rückseite des Bildschirmgehäuses 22 in die am Aufnahmegehäuse 26 ausgebildete Ausnehmung 36 einfügt. Eine andere Möglichkeit ist, die mit dem Bildschirmgehäuse 22 und den Bauelementen 30 bestückte Bodenplatte 24 in das mit Standfüssen versehene Aufnahmegehäuse 26 zu schieben. Die Bodenplatte 24 ist mit Lüftungsschlitzen 38, das Aufnahmegehäuse 26 mit Lüftungsschlitzen 40 versehen, welche den Durchtritt von Kühlluft erlauben. Die Bodenplatte 24 weist außerdem an ihrer Unterseite eine Aussparung 42 auf, welche den Zutritt von Kühlluft zur Unterseite der Bodenplatte 24 auch bei kurzen Standfüssen 34 ermöglicht.

An der gewölbten Rückseite des Bildschirmgehäuses 22 ist eine rechteckige Öffnung 44 ausgeschnitten. Die jeweils in Schwenkebenen liegenden Begrenzungskanten 46, 48 sind in kreisbogenförmig gebogenen Schienen 50, 52 geführt. Die Schienen 50, 52 sind über jeweils diesen zugeordnete Befestigungsböcke 54, 56 auf der Bodenplatte 24 befestigt. Die beschriebene Lagerung erlaubt eine Schwenkbewegung des halbzylindrischen Bildschirmgehäuses 22 um die Zylinderachse, die damit zur Schwenkachse 28 wird. Die Öffnung 44 ist außerdem für den Durchtritt der nicht dargestellten Verbindungskabel sowie des Bildröhrenhalses 32 erforderlich.

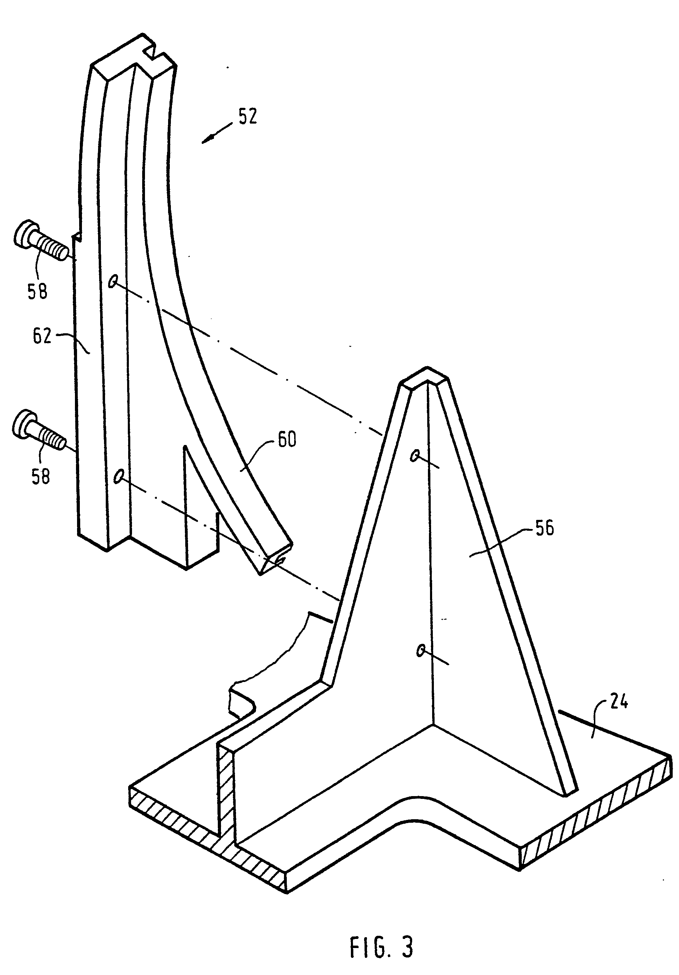

Fig. 3 zeigt in vergrößerter Darstellung ein Lagerungselement gemäß Fig. 2. Auf der Bodenplatte 24 ist ein winkliger Befestigungsbock 56 angeordnet. An diesem kann mittels der Schrauben 58 eine kreisbogenförmige Schiene 52 befestigt werden. Die Schiene besteht aus einem kreisbogenförmigen U-Profil 60 sowie einem damit verbunden Befestigungsflansch 62. Die Montage des Bildschirmgerätes gemäß Fig. 2 erfolgt beispielsweise in folgenden Montageschritten: Zunächst werden die Schienen 50, 52 auf die zugeordneten Begrenzungskanten 46, 48 aufgeschoben. Dann wird das Bildschirmgehäuse 22 auf die Bodenplatte 24 aufgesetzt und die Schienen 50, 52 mit den zugeordneten Befestigungsböcken 54, 56 verschraubt. Danach wird von der offenen Vorderseite des Bildschirmgehäuses 22 her die mit einer rahmenförmigen Bildschirmblende versehene Bildröhre in das Bildschirmgehäuse 22 eingesetzt, wobei der Bildröhrenhals 32 durch die Öffnung 44 hindurchtritt. Sodann werden die elektrischen Verbindunge zwischen den im Bildschirmgehäuse 22 und den auf der Bodenplatte 24 angeordneten Bauelementen hergestellt, Abschließend wird das Aufnahmegehäuse 26 über die Bodenplatte 24 geschoben und an dieser befestigt.

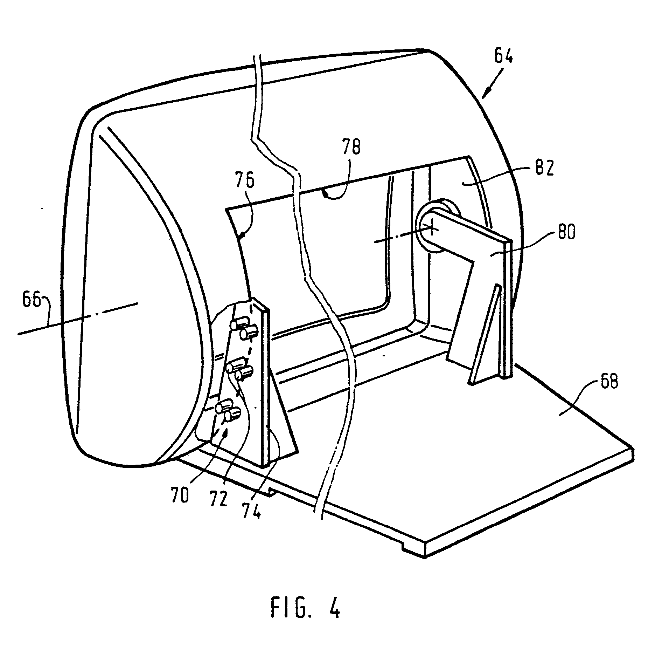

Fig. 4 zeigt in einer vereinfachten Darstellung ein Bildschirmgehäuse 64, welches um eine Schwenkachse 66 schwenkbar auf der Bodenplatte 68 befestigt ist. Das Bildschirmgehäuse 64 entspricht dem in Fig. 2 dargestellten Bildschirmgehäuse. Im linken Teil der Figur ist die Halteeinrichtung für die schwenkbare Lagerung des Bildschirmgehäuses 64 durch eine Rollenbahn 70 gebildet, welche aus mehreren auf einer kreisbogenförmigen Linie hintereinander angeordneten Rollenpaaren 72 besteht. Die Rollen 72 einer Rollenbahn 70 sind jeweils an einem Befestigungsbock 74 drehbar angeordnet und dienen jeweils zur Führung einer in einer Schwenkebene liegenden Begrenzungskante 76 einer an der Rückseite des Bildschirmgehäuses 64 ausgebildeten Öffnung 78.

In der rechten Bildhälfte der Fig. 4 wird die Halteeinrichtung zur schwenkbaren Lagerung des Bildschirmgehäuses 64 durch einen durch die Öffnung 78 hindurchgreifenden Haltearm 80 gebildet, welcher an der Innenseite der Stirnwand 82 des Bildschirmgehäuses angreift. Wie nicht näher dargestellt zu werden braucht, ist der Haltearm 80 beispielsweise mit einer Zapfenaufnahme, die Stirnseite 82 mit einem in der Zapfenaufnahme gelagerten Zapfen versehen.

Die Gewichtsverteilung des vollbestückten Bildschirmgehäuses ist vorzugsweise so gewählt, daß die Schwenkachse jeweils eine Schwereachse darstellt. Das gilt insbesondere für die besonders leichtgängige Lagerung gemäß Fig. 4, linke Bildhälfte. In diesem Fall bleibt das Bildschirmgehäuse 64 ohne weitere Lagefixierungsmittel in jeder Neigungslage stehen.

Bei einer Lagerung gemäß den Fig. 2 und 3 kann eine zusätzliche Lagefixierung dadurch erreicht werden, daß die Begrenzungskanten 46, 48 des Bildschirmgehäuses 22 reibschlüssig von den zugeordneten Schienen 50, 52 gehalten werden. Das gleiche gilt für die Halteeinrichtung gemäß der Fig. 4, rechte Bildhälfte, bei der beispielsweise der an der Stirnwand 82 angeordnete Zapfen reibschlüssig in die am Haltearm 80 angeordnete Zapfenaufnahme eingreift.

**Patentansprüche**

1. Bildschirmgerät mit einem einen Bildschirm aufnehmenden Bildschirmgehäuse, welches um eine zur Bildschirmebene parallele Achse schwenkbar an einem Aufnahmegehäuse angeordnet ist, wobei die am Aufnahmegehäuse anliegenden Außenwände des Bildschirmgehäuses die Form eines Kreiszylinderabschnittes mit einer mit der Schwenkachse zusammenfallenden Kreiszylinderachse haben, und wobei die Bildschirmebene im wesentlichen mit einer zur Kreiszylinderachse parallelen Schnittebene zusammenfällt, dadurch gekennzeichnet, daß die genannte Schnittebene die einzige Schnittebene des Kreiszylinderabschnitts ist und daß die zylindrisch gewölbte Rückseite des Bildschirmgehäuses (6, 22, 64) nur mit einem Teil ihres Umfanges in einer dazu komplementären, konkaven Ausnehmung (19, 36) in der Frontseite des hinter dem Bildschirmgehäuse (6, 22, 64) angeordneten Aufnahmegehäuses (8, 26) aufgenommen wird und daß die Breite und die Höhe des Aufnahmegehäuses (8) jeweils gleich oder kleiner als die Breite und die Höhe des Bildschirmgehäuses (6) sind.

2. Bildschirmgerät nach Anspruch 1, dadurch gekennzeichnet, daß das Bildschirmgehäuse (6, 22, 64) die Form eines Halbzylinders hat.

3. Bildschirmgerät nach einem der Ansprüche 1 oder 2, dadurch gekennzeichnet , daß eine Halteeinrichtung vorgesehen ist, die wenigstens einen an einer zur Zylinderachse senkrechten Stirnwand des Bildschirmgehäuses (64) angreifenden Haltearm (80) umfaßt.

4. Bildschirmgerät nach Anspruch 3, dadurch gekennzeichnet, daß der oder die Haltearme (80) jeweils durch eine an der Rückseite des Bildschirmgehäuses (64) befindliche Öffnung (78) hindurchgreifen und an der Innenseite der zur Zylinderachse senkrechten Stirnwände (82) angreifen.

5. Bildschirmgerät nach einem der Ansprüche 1 oder 2, dadurch gekennzeichnet, daß an der Rückseite des Bildschirmgehäuses (22) eine Öffnung (44) mit in Schwenkebenen liegenden Begrenzungskanten (46, 48) ausgeschnitten ist und daß jede dieser Begrenzungskanten (46, 48) in einer an einem Lagerbock (54, 56) angeordneten kreisbogenförmigen Führung (50, 52) gehalten wird.

6. Bildschirmgerät nach Anspruch 5, dadurch gekennzeichnet, daß die Führungen jeweils als die Begrenzungskanten aufnehmende Schienen (50, 52) ausgebildet sind.

7. Bildschirmgerät nach Anspruch 5, dadurch gekennzeichnet, daß die Führungen jeweil als aus mehreren auf einer kreisbogenförmigen Linie hintereinander angeordneten Rollenpaaren (72) bestehenden Rollenbahnen (70) ausgebildet sind.

8. Bildschirmgerät nach Anspruch 3, dadurch gekennzeichnet, daß die Halteeinrichtung (50, 52, 54, 56) für die schwenkbare Lagerung des Bildschirmgehäuses (22) auf einer Bodenplatte (24) befestigt ist, welche in das Aufnahmegehäuse (26) einsetzbar ist.

9. Bildschirmgerät nach Anspruch 8, dadurch gekennzeichnet, daß die Bodenplatte (24) etwa senkrecht zur konkaven Frontseite (19) des Aufnahmegehäuses (26) in dieses einschiebbar bzw. aus diesem herausschiebbar ist.

10. Bildschirmgerät nach einem der vorangehenden Ansprüche, dadurch gekennzeichnet, daß wenigstens ein Teil der Bauteile des Bildschirmgerätes (2, 20) im Aufnahmegehäuse (8, 26) angeordnet ist und daß das Bildschirmgehäuse (6, 22) und das Aufnahmegehäuse (8, 26) über durch die einander zugewandten Seiten der Gehäuse geführte flexible Leitungen miteinander elektrisch verbunden sind.

11. Bildschirmgerät nach Anspruch 8 oder 9, dadurch gekennzeichnet, daß die Bodenplatte (24) mit Standfüßen (34) versehen ist und daß das Aufnahmegehäuse (26) auf die Bodenplatte (24) aufschiebbar ist.

12. Bildschirmgerät nach einem der Ansprüche 1 bis 11, dadurch gekennzeichnet, daß die zur Schwenkachse (4, 28, 66) parallele Schwerelinie des Bildschirmgehäuses (6, 22, 64) wenigstens annähernd mit der Schwenkachse (4, 28, 66) desselben zusammenfällt.

13. Bildschirmgerät nach einem der Ansprüche 3 bis 12, dadurch gekennzeichnet, daß die Halteeinrichtung (50, 52; 80) für die Lagerung des Bildschirmgehäuses (22, 64) Mittel zur Schwenklagefixierung desselben umaßt.


## Claims

1. Viewing screen unit with a viewing screen housing receiving the viewing screen, which is mounted swivelably around a swivel axis parallel to the plane of the viewing screen at a receiving housing, the external walls of the viewing screen housing adjacent to the receiving housing having the form of a circular cylinder segment with the cylinder axis coinciding with the swivel axis and the plane of the viewing screen coinciding generally with an intersecting plane parallel to the cylinder axis, characterized in that the said intersecting plane is the only intersecting plane of the circular cylinder segment, in that the cylindrically curved back side of the viewing screen housing (6, 22, 64) is received with only part of its periphery in a concave recess (19, 36) with a curvature complementary to this in a front side of the receiving housing (8, 26) positioned behind the viewing screen housing (6, 22, 64) and in that the width and the height of the receiving housing (8) is equal to or less than the width and the height of the viewing screen housing (6).

2. Viewing screen unit as claimed in Claim 1, characterized in that the viewing screen housing (6, 22, 64) has the shape of a semi-cylinder.

3. Viewing screen unit as claimed in Claim 1 or 2, characterized in that a supporting unit is provided which includes at least one supporting arm (80) acting on an end wall of the viewing screen housing (64), the end wall being perpendicular to said cylinder axis.

4. Viewing screen unit as claimed in Claim 3, characterized in that the supporting arm or arms (80) respectively grip through an opening (78) located on the back side of the viewing screen housing (64) and act on the inside of the end walls (82) perpendicular to the cylinder axis.

5. Viewing screen unit as claimed in Claim 1 or 2, characterized in that on the back side of the viewing screen housing (22) an opening (44) is cut out with boundary edges (46, 48) lying in swiveling planes and in that each of these boundary edges (46, 48) is supported in an arc-shaped guide (50, 52) supported on a clamping stand (54, 56) respectively.

6. Viewing screen unit as claimed in Claim 5, characterized in that the guides are respectively formed as rails (50, 52) receiving the boundary edges.

7. Viewing screen unit as claimed in Claim 5, characterized in that the guides are respectively constructed as roller tracks (70) consisting of a plurality of pairs (72) of rollers arranged one behind another on an arc-shaped line.

8. Viewing screen unit as claimed in Claim 3, characterized in that the supporting unit for the swivelable supporting of the viewing screen housing (22) is mounted on a bottom plate (24) which plate can be placed in the receiving housing (26).

9. Viewing screen unit as claimed in Claim 8, characterized in that the bottom plate (24) can be pushed into or pushed out of the receiving housing (26) approximately perpendicularly to the concave front side (19) of the latter.

10. Viewing screen unit as claimed in one of the preceding Claims, characterized in that at least part of the component parts of the viewing screen unit (2, 20) are arranged in the receiving housing (8, 26) and that the viewing screen housing (6, 22) and the receiving housing (8, 26) are electrically connected to each other by way of flexible lines running through the sides of the housings turned toward each other.

11. Viewing screen unit as claimed in one of the Claims 8 or 9, characterized in that the bottom plate (24) is provided with standing feet (34) and that the receiving housing (26) can be pushed onto the bottom plate (24).

12. Viewing screen unit as claimed in one of the Claims 1 to 11, characterized in that the axis of gravity of the viewing screen housing (6, 22, 64) which axis is parallel to the swiveling axis (4, 28, 66) coincides at least approximately with the swiveling axis (4, 28, 66) of the housing.

13. Viewing screen unit as claimed in one of the Claims 3 to 12, characterized in that the supporting unit (50, 52; 80) for the supporting of the viewing screen housing (22, 64) includes means for fixing the latter in any of its swiveled positions.

## Revendications

1. Appareil à écran de visualisation avec un boîtier d'écran contenant un écran, qui est disposé dans un coffret de façon à pouvoir pivoter autour d'un axe parallèle au plan de l'écran, les parois extérieures du boîtier d'écran qui sont voisines du coffret ayant la configuration d'un segment de cylindre circulaire dont l'axe de cylindre coïncide avec l'axe de pivotement, et le plan de l'écran coïncidant pour l'essentiel avec un plan de coupe parallèle à l'axe du cylindre, caractérisé en ce que ledit plan de coupe est l'unique plan de coupe du segment de cylindre circulaire et la face arrière bombée cylindriquement du boîtier d'écran (6, 22, 64) est logée seulement par une partie de sa périphérie dans un évidement (19, 36) concave, complémentaire existant dans le côté frontal du coffret (8, 26) situé derrière le boîtier d'écran (6, 22, 64), et la largeur et la hauteur du coffret (8) sont chacune égales ou inférieures à la largeur et à la hauteur du boîtier d'écran (6).

2. Appareil à écran de visualisation selon la revendication 1, caractérisé en ce que le boîtier d'écran (6, 22, 64) a la configuration d'un demi-cylindre.

3. Appareil à écran de visualisation selon l'une quelconque des revendications 1 ou 2, caractérisé en ce qu'il est prévu un dispositif de support qui comprend au moins un bras porteur (80) s'appliquant sur une paroi extrême du boîtier d'écran (64) perpendiculaire à l'axe du cylindre.

4. Appareil à écran de visualisation selon la revendication 3, caractérisé en ce que le ou les bras (80) passent à travers une ouverture (78) se trouvant sur la face arrière du boîtier d'écran (64) et s'appliquent respectivement sur la face intérieure des parois extrêmes (82) perpendiculaires à l'axe du cylindre.

5. Appareil à écran de visualisation selon l'une quelconque des revendication 1 ou 2, caractérisé en ce que dans la face arrière du boîtier d'écran (22), est découpée une ouverture (44) dont les bords (46, 48) sont situés dans des plans de pivotement, et chacun de ces bords (46, 48) est tenu dans une glissière (50, 52) en arc de cercle disposée sur un sabot porteur (54, 56).

6. Appareil à écran de visualisation selon la revendication 5, caractérisé en ce que les glissières sont conformées en rails de guidage (50, 52) contenant lesdits bords.

7. Appareil à écran de visualisation selon la revendication 5, caractérisé en ce que les glissières sont constituées, respectivement, par des chemins de roulement (70) composés de plusieurs paires de rouleaux (72) disposées l'une derrière l'autre sur une ligne en arc de cercle.

8. Appareil à écran de visualisation selon la revendication 3, caractérisé en ce que le dispositif de support (50, 52, 54, 56) pour le montage pivotant du boîtier d'écran (22) est fixé à une plaque de base (24) qui peut être introduite dans le coffret (26).

9. Appareil à écran de visualisation selon la revendication 8, caractérisé en ce que la plaque de base (24) peut être introduite dans le coffret (26) et tirée de celui-ci sensiblement perpendiculairement à la face frontale concave (19) dudit coffret.

10. Appareil à écran de visualisation selon l'une quelconque des revendications précédentes, caractérisé en ce qu'au moins une partie des éléments constitutifs de l'appareil à écran de visualisation (2, 20) est disposée dans le coffret (8, 26) et le boîtier d'écran (6, 22) ainsi que le coffret (8, 26) sont raccordés electriquement par des câbles flexibles passant à travers les côtés tournés l'un vers l'autre du boîtier et du coffret.

11. Appareil à écran de visualisation selon la revendication 8 ou 9, caractérisé en ce que la plaque de base (24) est pourvue de pieds (34) et le coffret (26) peut être enfilé sur la plaque de base (24).

12. Appareil à écran de visualisation selon l'une quelconque des revendications 1 à 11, caractérisé en ce que la ligne passant par le centre de gravité parallèlement à l'axe de pivotement (4, 28, 66) du boîtier d'écran (6, 22, 64) coïncide au moins approximativement avec ce même axe de pivotement (4, 28, 66).

13. Appareil à écran de visualisation selon l'une quelconque des revendications 3 à 12, caractérisé en ce que le dispositif de support (50, 52, 80) pour le guidage du boîtier d'écran (22, 64) comprend un moyen de blocage à une position quelconque de pivotement de ce dernier.

FIG. 1

FIG. 2

FIG. 3

FIG. 4